# EUROPÄISCHE PATENTSCHRIFT

(11) **EP 3 178 986 B1**
(45) Veröffentlichungstag und Bekanntmachung des Hinweises auf die Patenterteilung: **03.07.2024**
(21) Anmeldenummer: 16002190.3
(22) Anmeldetag: 11.10.2016
(51) Int. Cl.: B65G 47/50, B65G 47/61, D06F 95/00

(54) **VERFAHREN UND VORRICHTUNG ZUM SORTIEREN VON WÄSCHESTÜCKEN**
METHOD AND DEVICE FOR SORTING LAUNDRY ITEMS
PROCÉDÉ ET DISPOSITIF DE TRI DE LINGE

(30) Priorität: 07.12.2015 DE 102015015708
(43) Veröffentlichungstag der Anmeldung: 14.06.2017
(73) Patentinhaber: Herbert Kannegiesser GmbH, 32602 Vlotho (DE)
(72) Erfinder: Heinz, Engelbert, 32602 Vlotho (DE); Bringewatt, Wilhelm, 32457 Porta Westfalica (DE); Holtz, Peter, 32547 Bad Oeynhausen (DE); Sielermann, Jürgen, 73540 Heubach (DE)
(74) Vertreter: Meissner Bolte Partnerschaft mbB

(56) Entgegenhaltungen:
- EP-A1- 0 516 970
- EP-A2- 0 377 548
- WO-A1-92/11954
- US-A- 5 377 814

## Beschreibung

Die Erfindung betrifft ein Verfahren und eine Vorrichtung zum Sortieren von Wäschestücken, insbesondere Schmutzwäschestücken, gemäß den Oberbegriffen der Ansprüche 1 und 10.

In Großwäschereien werden Wäschestücke, insbesondere Schmutzwäschestücke, von den einzelnen Kunden, in z. B. Säcken oder Wäschewagen angeliefert. Dabei sammelt sich eine große Anzahl von Wäschestücken unterschiedlicher Art sowie Beschaffenheit an. Diese Wäschestücke unterschiedlicher Beschaffenheit können verschiedene Gewebearten, Größen sowie unterschiedliche Farben aufweisen. Aufgrund der verschiedenen Beschaffenheiten der Wäschestücke müssen diese unterschiedlich behandelt werden. Aufgrund dessen ist es vor der eigentlichen Wäsche notwendig, diese Wäschestücke nach gleichen oder ähnlichen Beschaffenheiten zu sortieren. Hierzu werden die Wäschestücke erfasst, auf ihre Art bzw. Beschaffenheit erfasst sowie in Abhängigkeit von den genannten Kriterien gemäß den entsprechenden Behandlungsschritten und eventuellen Sonderbehandlungen, sortiert.

Bei bekannten Sortiereinrichtungen werden die Wäschestücke zunächst einzeln oder in mehreren Haufen auf einem Förderer Sortierstationen zugeführt. An den Sortierstationen werden die einzelnen Wäschestücke entweder direkt von Personen an entsprechende Abgabestellen verteilt oder an ein Schienensystem übergeben. Die einzelnen Wäschestücke weisen jeweils ein Sortierkriterium auf, was insbesondere an ein Transportmittel an dem Schienensystem übertragen werden kann. Die einzelnen Wäschestücke werden sodann an dem Schienensystem hängend weiteren Abgabestellen zugeführt oder in einen Speicher geleitet, der mehrere Speicherstrecken aufweist.

Die Wäschestücke mit gleichen Beschaffenheiten bzw. gleichen Sortierkriterien werden dabei in Abgabestellen, insbesondere in Behältern, denen entsprechende Sortierkriterien zugeordnet sind, abgelegt. Bei großen Chargen von Wäschestücken kann es allerdings vorkommen, dass Wäschestücke mit einem bestimmten Sortierkriterium häufiger vorkommen als Wäschestücke mit einem anderen Sortierkriterium. Dadurch werden die Abgabestellen der Sortiereinrichtung sehr ungleichmäßig mit Wäschestücken befüllt. Während Abgabestellen, welche einem Sortierkriterium zugeordnet sind, für das sehr viele Wäschestücke vorhanden sind, ständig geleert werden müssen, bleiben andere Abgabestellen, deren Sortierkriterien bei den zu sortierenden Wäschestücken nur sehr selten auftreten, lange Zeit so gut wie ungefüllt. Dies hat eine sehr ineffiziente Sortierweise zur Folge und verringert dadurch die Sortierleistung der Sortiereinrichtung.

Das Dokument US 5 377 814 A offenbart eine Vorrichtung und ein Verfahren zum Sortieren von Wäschestücken, wobei die Vorrichtung mit einem Förderer mit einem mindestens eine Speicherstrecke aufweisenden Speicher und mit Abgabestellen für Wäschestücke mit entsprechenden Sortierkriterien versehen ist, wobei der Förderer die Wäschestücke durch den Speicher hindurch und an den Abgabestellen vorbeitransportiert, und wobei mindestens einigen Abgabestellen wechselnde Sortierkriterien zuweisbar sind.

Hiervon ausgehend liegt der Erfindung die Aufgabe zugrunde, ein Verfahren und eine Vorrichtung zum Sortieren von Wäschestücken mit einer erhöhten Sortierleistung zu schaffen.

Ein Verfahren zur Lösung dieser Aufgabe weist die Maßnahmen des Anspruchs 1 auf. Demnach ist es vorgesehen, dass mindestens einigen Abgabestellen wechselnde Sortierkriterien zugewiesen werden. Sobald eine Abgabestelle mit Wäschestücken gefüllt ist, können diese an einen weiteren Beförderer zur Weiterbehandlung abgegeben werden. Der dann geleerten Abgabestelle kann erneut dasselbe Sortierkriterium zugewiesen werden oder ein Sortierkriterium, dass sich von dem vorherigen unterscheidet. Die Entscheidung, welches Sortierkriterium der Abgabestelle zugewiesen wird, kann davon abhängig gemacht werden, welche Sortierkriterien die als nächstes zu sortierenden Wäschestücke aufweisen. Dadurch lässt sich besonders effizient die Sortierkapazität der Sortiereinrichtung nutzen.

Insbesondere kann es die vorliegende Erfindung weiter vorsehen, dass wenn an einer Abgabestelle ein Posten mit Wäschestücken gleichen Sortierkriteriums zusammengestellt ist, der Abgabestelle erforderlichenfalls ein anderes Sortierkriterium zugeordnet wird. So ist es beispielsweise denkbar, dass die Wäschestücke gleichen Sortierkriteriums in dem Speicher bzw. in einer Speicherstrecke zwischengespeichert werden, bis eine bestimmte Anzahl von Wäschestücken erreicht ist. Darauf wird einer Abgabestelle, die zuvor geleert wurde, das entsprechende Sortierkriterium zugeordnet, woraufhin die Wäschestücke über das Schienensystem zu dieser Abgabestelle transportiert werden. Dies gestaltet sich als besonders vorteilhaft für Wäschestücke mit Sortierkriterien, die selten vorkommen.

Bevorzugt kann es weiter vorgesehen sein, dass die der Abgabestelle zugeordneten Sortierkriterien bedarfsweise gewechselt werden. Je nach Anzahl der Wäschestücke mit einem bestimmten Sortierkriterium im Speicher kann es vorteilhaft sein, wenn die Sortierkriterien den Abgabestellen entsprechend gewechselt werden. Stellt sich beispielsweise heraus, dass alle Wäschestücke das gleiche Sortierkriterium aufweisen, so kann allen Abgabestellen ebenfalls das gleiche Sortierkriterium zugewiesen werden, damit alle Wäschestücke möglichst schnell und effizient an die Abgabestellen übergeben werden.

Ein weiteres Ausführungsbeispiel der vorliegenden Erfindung kann es vorsehen, dass mindestens einer Abgabestelle nur temporär ein bestimmtes Sortierkriterium zugeordnet wird. Während einigen Abgabestellen stets das gleiche Sortierkriterium zugewiesen werden kann, ist es denkbar, dass eine ausgewiesene Abgabestelle für Wäschestücke vorgesehen ist, deren Sortierkriterien seltener vorkommen als andere. Sobald die Abgabestelle für diese Sortierkriterien gefüllt ist, wird sie geleert, um Wäschestücke mit einem anderen Sortierkriterium aufzunehmen, die ähnlich selten vorkommen.

Weiter kann es vorgesehen sein, dass die Wäschestücke ihren Sortierkriterien entsprechend auf Speicherstrecken des Speichers gezielt zwischengespeichert werden. Durch dieses Zwischenspeichern einzelner Wäschestücke werden diese Wäschestücke in Gruppen zusammengefasst, die gleiche Sortierkriterien aufweisen. So kann die Sortiereinrichtung beispielsweise eine Vielzahl von Speicherstrecken aufweisen, denen jeweils ein Sortierkriterium zugewiesen ist. Es ist jedoch auch denkbar, dass der Speicher nur eine Speicherstrecke aufweist, in der die Gruppen von Wäschestücken mit gleichem Sortierkriterium, insbesondere hintereinander, zusammengestellt werden. Sobald eine kritische Anzahl von Wäschestücken mit gleichem Sortierkriterium erreicht ist, werden diese gemeinschaftlich über das Schienensystem der entsprechenden Abgabestelle zugeführt.

Bevorzugt kann es weiter vorgesehen sein, dass Wäschestücke vom Förderer aus dem Speicher an den aufeinanderfolgenden Abgabestellen vorbeigefahren werden und Wäschestücke, deren Sortierkriterien den momentan den Abgabestellen zugeordneten Sortierkriterien entsprechen, der oder den jeweiligen Abgabestellen zugeführt werden. Dabei kommunizieren die Transportmittel der Wäschestücke, auf denen die Sortierkriterien des Wäschestücks gespeichert sind, mit den Abgabestellen, so dass stets die Position des Wäschestücks relativ zu den Abgabestellen bekannt ist und somit eine gezielte Zuordnung des Wäschestücks möglich ist. Dabei können die Wäschestücke direkt von der Sortiereingabe oder aus dem Speicher den Abgabestellen zugeführt werden.

Erfindungsgemäß werden Wäschestücke mit Sortierkriterien, die keinen den Abgabestellen momentan zugeordneten Sortierkriterien entsprechen, in den Speicher zurücktransportiert, wobei die Wäschestücke in eine andere Speicherstrecke des Speichers zurücktransportiert werden. Dieses Zurücktransportieren der Wäschestücke erfolgt solange, bis eine Abgabestelle dem Sortierkriterium des Wäschestücks entspricht. Darüber hinaus ist es denkbar, dass ein Wäschestück, dem kein Sortierkriterium zugewiesen werden kann oder dessen Sortierkriterium zu selten vorkommt, einzeln aus der Sortiereinrichtung abgeführt wird.

Ein weiteres Ausführungsbeispiel der Erfindung kann es vorsehen, dass eine Abgabestelle erst einem Sortierkriterium zugewiesen wird, wenn in einer Speicherstrecke eine gewisse Anzahl von Wäschestücken mit gleichen Sortierkriterien zwischengespeichert wird.

Eine Vorrichtung zur Lösung der eingangs genannten Aufgabe weist die Merkmale des Anspruchs 10 auf. Demnach ist es vorgesehen, dass mindestens einigen Abgabestellen wechselnde Sortierkriterien zuweisbar sind. Diese Zuweisung kann händisch oder automatisch erfolgen, und zwar in Abhängigkeit von der Anzahl von Wäschestücken mit gleichen Sortierkriterien, die sich in der Speicherstrecke befinden. Insbesondere kann der Vorrichtung eine Steuereinrichtung zugeordnet sein, der die Position und die Sortierkriterien aller sich im Speicher befindenden Wäschestücke bekannt sind. Darüber hinaus kann das Steuersystem den Abgabestellen verschiedene Sortierkriterien zuweisen. In Kenntnis der Sortierkriterien der Wäschestücke werden diese dann den entsprechenden Abgabestellen zugeführt bzw. erst zugeführt, wenn eine ausreichende Anzahl von Wäschestücken gleichen Sortierkriteriums in dem Speicher zusammengefasst ist.

Insbesondere kann es die Erfindung vorsehen, dass die Wäschestücke vom Förderer von einer Aufgabestelle zum Speicher und aus dem Speicher zu den Abgabestellen führbar sind.

Bevorzugt kann es vorgesehen sein, dass wenn ein Wäschestück keinen der Abgabestellen zuführbar ist, dieses durch einen Kreislaufförderer erneut dem Speicher zuführbar ist. Weiter kann es vorgesehen sein, dass die Sortierkriterien den Abgabestellen temporär zuordbar sind.

Erfindungsgemäß sind die den Abgabestellen zugeordneten Sortierkriterien in Abhängigkeit davon änderbar, welche Wäschestücke den Abgabestellen als nächstes zuzuführen sind.

Darüber hinaus kann es des Weiteren vorgesehen sein, dass mehrere Abgabestellen unterschiedlichen Sortierkriterien zuordbar sind, vorzugsweise einigen Abgabestellen das gleiche Sortierkriterium zuordbar ist.

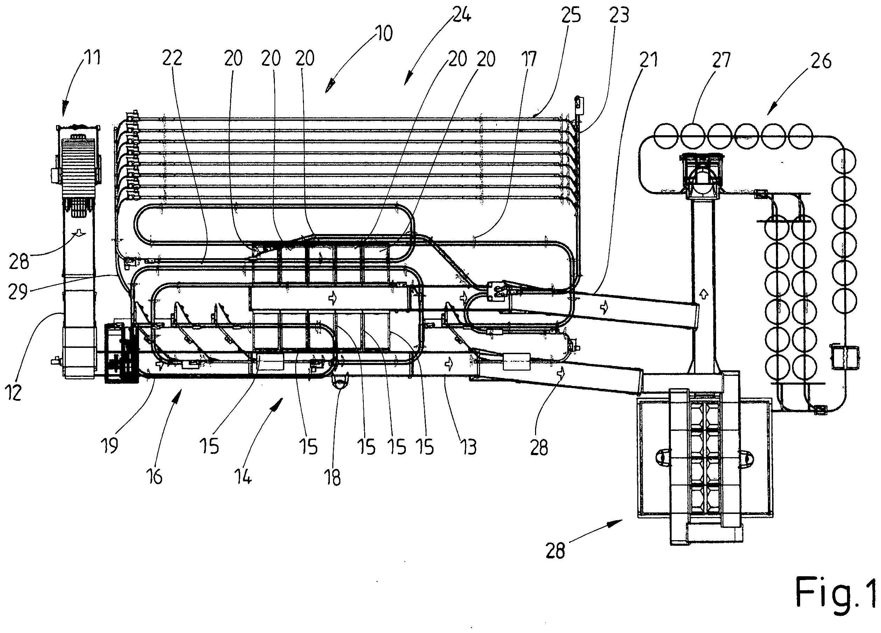

Ein bevorzugtes Ausführungsbeispiel der Erfindung wird nachfolgend anhand der Zeichnung näher erläutert. Die einzige Figur (Fig.) der Zeichnung zeigt eine schematisierte Ansicht der Vorrichtung.

Das in der Fig. dargestellte Ausführungsbeispiel einer Vorrichtung 10 zum Sortieren von Wäschestücken, insbesondere Schmutzwäschestücken, stellt ein mögliches Ausführungsbeispiel der vorliegenden Erfindung dar. Die hier dargestellte Vorrichtung 10 ist aus mehreren Einrichtungen zum Transport bzw. Fördern, Eingeben von Wäschestücken, Sortieren sowie Ausgabe von Wäschestücken aufgebaut. Es sei an dieser Stelle ausdrücklich darauf hingewiesen, dass die vorliegende Erfindung nicht auf diese Kombination der einzelnen Einrichtungen eingeschränkt ist, sondern sich vielmehr auch auf jede andere mögliche Kombination der dargestellten Einrichtungen sowie weiteren Einrichtungen erstrecken soll.

Das in der Fig. dargestellte Ausführungsbeispiel der Vorrichtung 10 weist zunächst eine Eingabestelle 11 auf, in die Wäschechargen, bestehend aus einer Vielzahl von einzelnen Wäschestücken, eingebbar sind. An die Eingabestelle 11 schließt sich ein Förderer 12 an, bei dem es sich beispielsweise um einen Endlosgurtförderer oder dergleichen handeln kann. An den Förderer 12 schließt sich ein weiterer Förderer 13 an, der entlang einer Sortiereinrichtung 14 führt. Dieser Sortiereinrichtung sind bei dem hier dargestellten Ausführungsbeispiel fünf Abgabestellen 15 zugeordnet. Die Abgabestellen 15 sind entlang des Förderers 13 angeordnet. Des Weiteren ist der Sortiereinrichtung 14 ein Schienensystem 16 zugeordnet, an dem eine Vielzahl von Transportbügeln 17 beweglich gelagert ist. Das Schienensystem 16 weist Mitnehmer auf, welche die Transportbügel 17 entlang des Schienensystems 16 führen können. An der Sortiereinrichtung 14 werden einzelne Wäschestücke von einer Person 18 an die Transportbügel 17 übergeben. Die hier dargestellten Transportbügel 17 weisen jeweils einen Datenspeicher auf, auf dem die Sortierkriterien jedes einzelnen Wäschestücks, wie beispielsweise die Art, Größe und/oder Farbe des Wäschestücks, gespeichert werden.

Das Schienensystem 16 weist einen ersten Kreislaufförderer 19 auf. Die Transportbügel 17 bzw. die Wäschestücke werden von der Person 18 zunächst dem ersten Kreislaufförderer 19 zugeführt. Das Schienensystem des ersten Kreislaufförderers 19 führt im weiteren Verlauf an weiteren Abgabestellen 20 vorbei. Im weiteren Verlauf führt der erste Kreislaufförderer 19 zurück zu der Sortiereinrichtung 14, so dass sich ein geschlossener Kreislauf bildet.

Den Abgabestellen 15 und 20 ist bei dem hier dargestellten Ausführungsbeispiel ein gemeinsamer Förderer 21 zugeordnet, bei dem es sich beispielsweise um einen Endlosgurtförderer Handeln kann. Die Abgabestellen 15, 20 sind derart ausgebildet, dass sie sich auf dem Förderer 21 entleeren können.

Der Abschnitt des ersten Kreislaufförderers 19, entlang der Abgabestellen 20, stellt einen Speicher 22 dar, auf dem Wäschestücke zumindest kurzzeitig gespeichert werden können. An den ersten Kreislaufförderern 19 grenzt ein zweiter Kreislaufförderer 23, der hier als Speicher 24 ausgebildet ist. Der hier dargestellte Speicher 24 weist eine Vielzahl paralleler Speicherstrecken 25 auf. Transportbügel 17 bzw. Wäschestücke können von dem ersten Kreislaufförderer 19 über einen Übergangsabschnitt 29 oder einer Weiche auf den zweiten Kreislaufförderer 23 umgeleitet werden. Auf dem zweiten Kreislaufförderer 23 bzw. den Speicher 24 können die Transportbügel 17 in verschiedenen Speicherstrecken 25 zwischengespeichert werden.

Von dem zweiten Kreislaufförderer 23 lassen sich die einzelnen Transportbügel 17 bzw. Wäschestücke über einen weiteren nicht dargestellten Übergangsabschnitt 29 oder eine weitere Weichen auf den ersten Kreislaufförderer 19 zurückführen. Genau wie der erste Kreislaufförderer 19 weist auch der zweite Kreislaufförderer 23 einen Abschnitt auf, der über die Abgabestellen 20 verläuft.

Die Förderer 13 und 21 führen zu einer weiteren Behandlungseinrichtung 26, wo die Wäschestücke in Wäschesäcke 27 zu Posten zusammengefasst werden können. Des Weiteren ist der Behandlungseinrichtung 26 bei dem hier dargestellten Ausführungsbeispiel eine weitere Sortiereinrichtung 28 zugeordnet.

Im Folgenden soll anhand der zuvor beschriebenen Vorrichtung 10 das erfindungsgemäße Verfahren erläutert werden. Die zu behandelnden Wäschestücke bzw. die Schmutzwäschestücke werden zunächst der Eingabestelle 11 zugeführt, von wo sie in Behandlungsrichtung 28 von dem Förderer 12 dem Förderer 13 zugeführt werden. Dort werden sie in Behandlungsrichtung 28 der Sortiereinrichtung 14 zugeordnet. Hier werden die einzelnen Wäschestücke durch eine oder mehrere Personen 18 entweder manuell den Abgabestellen 15 zugeführt oder an Transportbügeln 17, die an dem Schienensystem 16 bzw. dem ersten Kreislaufförderer 19 zugeordnet sind, übergeben. Die Abgabestellen 15 können verschiedene Sortierkriterien aufweisen. So werden Wäschestücke, die den Sortierkriterien der Abgabestellen 15 entsprechen, diesen Abgabestellen 15 zusortiert. Sobald eine Abgabestelle 15 ihre Aufnahmekapazität erreicht hat, wird diese auf den Förderer 21 entleert. Die so auf dem Förderer 21 entleerte Gruppe von Wäschestücken gleichen Sortierkriteriums wird dann der Behandlungseinrichtung 26 zugeführt, wo sie beispielsweise in Wäschesäcke 27 verfrachtet werden.

Die Wäschestücke, die nicht von der Person 18 an die Abgabestelle 15 übergeben wurden, werden an den Transportbügeln 17 hängend entgegengesetzt zu der Behandlungsrichtung 28 auf dem Schienensystem 16 abtransportiert. Dabei sind die Sortierkriterien der einzelnen Wäschestücke auf den Transportbügeln 17 gespeichert. Im Folgenden werden die an den Transportbügeln 17 hängenden Wäschestücke entlang weiterer Abgabestellen 20 geführt. Auch diese Abgabestellen 20 weisen jeweils ein Sortierkriterium auf. Wäschestücke deren Sortierkriterium mit denen einer Abgabestelle 20 übereinstimmt, werden in dieser automatisch abgelegt. Dazu erfasst eine nicht dargestellte Steuereinrichtung das Sortierkriterium des Wäschestücks und steuert den Transportbügel 17 derart, dass dieser das Wäschestück über der entsprechenden Abgabestelle 20 fallen lässt.

Wäschestücke mit Sortierkriterien, die keinen der Sortierkriterien der Abgabestellen 20 entsprechen, werden über Schienen dem zweiten Kreislaufförderer 23 zugeführt. Hier können die Wäschestücke auf verschiedenen Speicherstrecken 25, denen ebenfalls unterschiedliche Sortierkriterien zugewiesen werden können, zwischengespeichert. Von diesen Speicherstrecken 25 sind die Wäschestücke erneut an den Abgabestellen 20 vorbeiführbar. Es ist erfindungsgemäß vorgesehen, dass den Abgabestellen wechselnde Sortierkriterien zugewiesen werden können. Hat beispielsweise eine Abgabestelle 20 ihre maximale Aufnahmekapazität erreicht, so werden diese Wäschestücke als Gruppe mit identischen Sortierkriterien an den Förderer 21 übergeben. Im Folgenden kann diese Abgabestelle 20 ein anderes Sortierkriterium oder aber auch das gleiche Sortierkriterium zugewiesen werden. Wäschestücke, die keinen der Sortierkriterien der Abgabestelle 20 entsprechen, werden zunächst in den Speicherstrecken 25 so lange zu einer Gruppe mit gleichen Sortierkriterien zusammengefasst, bis eine bestimmte Anzahl von Wäschestücken zusammengefasst wurde. Diese Gruppe von Wäschestücken gleichen Sortierkriteriums wird dann einer Abgabestelle 20 zugeführt, der entsprechend ein Sortierkriterium zugewiesen wird. Werden Wäschestücke aus dem Speicher 24 bzw. aus den Speicherstrecken 25 erneut an den Abgabestellen 20 vorbeigeführt und weisen diese erneut kein entsprechendes Sortierkriterium auf, werden die Wäschestücke wieder in dem Speicher 24 bzw. auf die Speicherstrecken 25 zurückgeführt.

Wäschestücke mit Sortierkriterien, von denen nur wenige Wäschestücke vorsortiert werden konnten, können auch der Sortiereinrichtung 14 zurückgeführt werden, wo sie manuell durch die Person 18 absortiert werden. Wenn eine Wäschecharge ausschließlich Wäschestücke mit einem einzigen Sortierkriterium aufweist, können auch mehreren oder allen Abgabestellen 20 das gleiche Sortierkriterium zugewiesen werden, um so die Vielzahl von Wäschestücken effizient und schnell abzuführen.

### Bezugszeichenliste:

- 10: Vorrichtung
- 11: Eingabestelle
- 12: Förderer
- 13: Förderer
- 14: Sortiereinrichtung
- 15: Abgabestellen
- 16: Schienensystem
- 17: Transportbügel
- 18: Person
- 19: erster Kreislaufförderer
- 20: Abgabestelle
- 21: Förderer
- 22: Speicher
- 23: zweiter Kreislaufförderer
- 24: Speicher
- 25: Speicherstrecke
- 26: Behandlungseinrichtung
- 27: Wäschesack
- 28: Behandlungsrichtung
- 29: Übergangsabschnitt

## Patentansprüche

1. Verfahren zum Sortieren von Wäschestücken, insbesondere Schmutzwäschestücken, wobei einzelne Wäschestücke von einem Förderer (12, 13, 19, 23) nacheinander in einen Speicher (22, 24) transportiert werden, die Wäschestücke aus dem Speicher (22, 24) zu Abgabestellen (15, 20) transportiert und an eine ihrem jeweiligen Sortierkriterium entsprechende Abgabestelle (15, 20) übergeben werden, wobei
mindestens einigen Abgabestellen (15, 20) wechselnde Sortierkriterien zugewiesen werden und wobei mindestens einer Abgabestelle (15, 20) nur temporär ein bestimmtes Sortierkriterium zugeordnet wird, **dadurch gekennzeichnet, dass**
die den Abgabestellen (15, 20) zugeordneten Sortierkriterien in Abhängigkeit davon geändert werden, welche Wäschestücke den Abgabestellen (15, 20) als nächstes zugeführt werden, und wobei
Wäschestücke mit Sortierkriterien, die keinen den Abgabestellen (15, 20) momentan zugeordneten Sortierkriterien entsprechen, in den Speicher (22, 24) zurücktransportiert werden, und wobei
in mindestens einer Speicherstrecke (25) des Speichers (24) Wäschestücke gesammelt werden, die über ein anderes Sortierkriterium verfügen, als die momentan den Abgabestellen (15, 20) zugeordneten Sortierkriterien.

2. Verfahren nach Anspruch 1, **dadurch gekennzeichnet, dass** wenn an einer Abgabestelle (15, 20) ein Posten mit Wäschestücken gleichen Sortierkriteriums zusammengestellt ist, der Abgabestelle (15, 20) erforderlichenfalls ein anderes Sortierkriterium zugeordnet wird.

3. Verfahren nach Anspruch 1 oder 2, **dadurch gekennzeichnet, dass** das der Abgabestelle (15, 20) zugeordnete Sortierkriterium bedarfsweise gewechselt wird.

4. Verfahren nach einem der vorhergehenden Ansprüche, **dadurch gekennzeichnet, dass** die Wäschestücke ihren Sortierkriterien entsprechend auf Speicherstrecken (25) des Speichers (24) gezielt zwischengespeichert werden und/oder Wäschestücke mit gleichen Sortierkriterien in die entsprechende Speicherstrecke (25) des Speichers (24) eingeführt werden.

5. Verfahren nach einem der vorhergehenden Ansprüche, **dadurch gekennzeichnet, dass** Wäschestücke vom Förderer (19, 23) aus dem Speicher (22 ,24) an den aufeinanderfolgenden Abgabestellen (15, 20) vorbeigefahren werden und Wäschestücke, deren Sortierkriterien dem momentan den Abgabestellen (15, 20) zugeordneten Sortierkriterien entsprechen, der oder den jeweiligen Abgabestelle (15, 20) zugeführt werden.

6. Verfahren nach einem der vorhergehenden Ansprüche, **dadurch gekennzeichnet, dass** Wäschestücke mit Sortierkriterien, die keinen den Abgabestellen (15, 20) momentan zugeordneten Sortierkriterien entsprechen, in den Speicher (22, 24) zurücktransportiert werden, wobei die Wäschestücke in eine andere Speicherstrecke (25) des Speichers (24) zurücktransportiert werden.

7. Verfahren nach einem der vorhergehenden Ansprüche, **dadurch gekennzeichnet, dass** einer Abgabestelle (15, 20) erst ein Sortierkriterium zugewiesen wird, wenn in einer Speicherstrecke (25) eine gewisse Anzahl von Wäschestücken mit gleichem Sortierkriterium zwischengespeichert wurde.

8. Vorrichtung (10) zum Sortieren von Wäschestücken, insbesondere Schmutzwäschestücken, mit einem Förderer (12, 13, 19, 23), mit einem mindestens eine Speicherstrecke (25) aufweisenden Speicher (22, 24) und mit Abgabestellen (15, 20) für Wäschestücke mit entsprechenden Sortierkriterien, wobei der Förderer (19, 23) die Wäschestücke durch den Speicher (22, 24) hindurch und an den Abgabestellen (15, 20) vorbeitransportiert, wobei mindestens einigen Abgabestellen (15, 20) wechselnde Sortierkriterien zuweisbar sind, **dadurch gekennzeichnet, dass** die Wäschestücke vom Förderer (19 23) von einer Aufgabestelle zum Speicher (22, 24) und aus dem Speicher (22, 24) zu den Abgabestellen (15, 20) führbar bzw. transportierbar sind und die den Abgabestellen (15, 20) zugeordneten Sortierkriterien in Abhängigkeit davon änderbar sind, welche Wäschestücke den Abgabestellen (15, 20) als nächstes zuzuführen sind.

9. Vorrichtung (10) nach Anspruch 8, **dadurch gekennzeichnet, dass** wenn ein Wäschestück keiner der Abgabestellen (15, 20) zuführbar ist, dieses durch einen Kreislaufförderer (19, 23) erneut dem Speicher (22, 24) zuführbar ist.

10. Vorrichtung (10) nach einem der Ansprüche 8 oder 9, **dadurch gekennzeichnet, dass** die Sortierkriterien den Abgabestellen (15, 20) temporär zuordbar sind.

11. Vorrichtung (10) nach einem der Ansprüche 8 bis 10, **dadurch gekennzeichnet, dass** mehreren Abgabestellen (15, 20) unterschiedliche Sortierkriterien, vorzugsweise einigen Abgabestellen (15, 20) das gleiche Sortierkriterium, zuordbar ist.

## Claims

1. Method for sorting laundry items, in particular dirty laundry items, wherein individual laundry items are transported by a conveyor (12, 13, 19, 23) one after the other into a storage means (22, 24), and the laundry items are transported from the storage means (22, 24) to discharging locations (15, 20) and are transferred to a discharging location (15, 20) corresponding to the respective sorting criterion thereof, wherein
at least a number of discharging locations (15, 20) are provided with varying sorting criteria and wherein at least one discharging location (15, 20) is only temporarily assigned a specific sorting criterion, **characterized in that**
the sorting criteria assigned to the discharging locations (15, 20) are changed in dependence on which laundry items are fed next to the discharging locations (15, 20), and wherein
laundry items with sorting criteria which do not correspond to any sorting criteria currently assigned to the discharging locations (15, 20) are transported back into the storage means (22, 24), and wherein
laundry items which have a sorting criterion different from the sorting criteria currently assigned to the discharging locations (15, 20) are collected in at least one storage section (25) of the storage means (24).

2. Method according to Claim 1, **characterized in that** when a batch with laundry items of the same sorting criterion has been put together at a discharging location (15, 20), the discharging location (15, 20) is, if necessary, assigned a different sorting criterion.

3. Method according to Claim 1 or 2, **characterized in that** the sorting criterion assigned to the discharging location (15, 20) is varied as required.

4. Method according to one of the preceding claims, **characterized in that** the laundry items are specifically stored on an interim basis on storage sections (25) of the storage means (24) in accordance with their sorting criteria and/or laundry items with the same sorting criteria are introduced into the corresponding storage section (25) of the storage means (24).

5. Method according to one of the preceding claims, **characterized in that** laundry items are moved by the conveyor (19, 23), from the storage means (22, 24), past the successive discharging locations (15, 20) and laundry items of which the sorting criteria correspond to the sorting criteria currently assigned to the discharging locations (15, 20) are fed to the respective discharging location or locations (15, 20).

6. Method according to one of the preceding claims, **characterized in that** laundry items with sorting criteria which do not correspond to any sorting criteria currently assigned to the discharging locations (15, 20) are transported back into the storage means (22, 24), wherein the laundry items are transported back into a different storage section (25) of the storage means (24).

7. Method according to one of the preceding claims, **characterized in that** a discharging location (15, 20) is provided with a sorting criterion for the first time when a certain number of laundry items with the same sorting criterion has been stored on an interim basis in a storage section (25).

8. Apparatus (10) for sorting laundry items, in particular dirty laundry items, having a conveyor (12, 13, 19, 23), having a storage means (22, 24) with at least one storage section (25), and having discharging locations (15, 20) for laundry items with corresponding sorting criteria, wherein the conveyor (19, 23) transports the laundry items through the storage means (22, 24) and past the discharging locations (15, 20), wherein at least a number of discharging locations (15, 20) can be provided with varying sorting criteria, **characterized in that** the laundry items can be guided and/or transported by the conveyor (19, 23) from a supply location to the storage means (22, 24) and from the storage means (22, 24) to the discharging locations (15, 20) and the sorting criteria assigned to the discharging locations (15, 20) can be changed in dependence on which laundry items are to be fed next to the discharging locations (15, 20).

9. Apparatus (10) according to Claim 8, **characterized in that**, if a laundry item cannot be fed to any of the discharging locations (15, 20), it can be fed anew to the storage means (22, 24) by a circulating conveyor (19, 23) .

10. Apparatus (10) according to either of Claims 8 and 9, **characterized in that** the sorting criteria can be temporarily assigned to the discharging locations (15, 20) .

11. Apparatus (10) according to one of Claims 8 to 10, **characterized in that** a plurality of discharging locations (15, 20) can be assigned different sorting criteria, preferably a number of discharging locations (15, 20) can be assigned the same sorting criterion.

## Revendications

1. Procédé de tri d'articles de linge, notamment d'articles de linge sales, des articles de linge individuels étant transportés les uns après les autres par un transporteur (12, 13, 19, 23) jusque dans un magasin (22, 24), les articles de linge étant transportés du magasin (22, 24) jusqu'à des points de délivrance (15, 20) et étant transférés à un point de délivrance (15, 20) correspondant au critère de tri respectif,
des critères de tri variables étant attribués au moins certains points de délivrance (15, 20) et
un critère de tri déterminé n'étant associé que temporairement à au moins à un point de délivrance (15, 20), **caractérisé en ce que** les critères de tri associés aux points de délivrance (15, 20) sont modifiés en fonction des articles de linge qui sont ensuite amenés aux points de délivrance (15, 20), et
les articles de linge dont les critères de tri ne correspondent à aucun critère de tri actuellement associé aux points de délivrance (15, 20) étant ramenés au magasin (22, 24), et
des articles de linge, qui ont un critère de tri différent des critères de tri actuellement associés aux points de délivrance (15, 20), étant collectés dans au moins une section de magasin (25) du magasin (24).

2. Procédé selon la revendication 1, **caractérisé en ce que**, si un lot d'articles de linge ayant le même critère de tri est constitué à un point de délivrance (15, 20), un critère de tri différent est associé au point de délivrance (15, 20) si nécessaire.

3. Procédé selon la revendication 1 ou 2, **caractérisé en ce que** le critère de tri associé au point de délivrance (15, 20) est modifié selon les besoins.

4. Procédé selon l'une des revendications précédentes, **caractérisé en ce que** les articles de linge sont spécifiquement stockés temporairement dans des sections de magasin (25) du magasin (24) selon leurs critères de tri et/ou les articles de linge ayant le même critère de tri sont introduits dans la section de magasin (25) correspondante du magasin (24).

5. Procédé selon l'une des revendications précédentes, **caractérisé en ce que** les articles de linge sont passés devant les points de délivrance (15, 20) successifs par le transporteur (19, 23) depuis le magasin (22, 24) et les articles de linge dont les critères de tri correspondent actuellement aux critères de tri associés aux points de délivrance (15, 20) sont amenés au(x) point(s) de délivrance (15, 20) respectif(s).

6. Procédé selon l'une des revendications précédentes, **caractérisé en ce que** des articles de linge dont les critères de tri ne correspondent à aucun critère de tri actuellement associé aux points de délivrance (15, 20) sont ramenés au magasin (22, 24), les articles de linge étant ramenés dans une autre section de magasin (25) du magasin (24).

7. Procédé selon l'une des revendications précédentes, **caractérisé en ce qu'**un critère de tri est attribué à un point de délivrance (15, 20) uniquement lorsqu'un certain nombre d'articles de linge ayant le même critère de tri a été temporairement stocké dans une section de magasin (25).

8. Dispositif (10) de tri d'articles de linge, notamment d'articles de linge sales, comprenant un transporteur (12, 13, 19, 23), un magasin (22, 24) pourvu d'au moins une section de magasin (25) et des points de délivrance (15, 20) destinés à des articles de linge ayant des critères de tri correspondants, le transporteur (19, 23) transportant les articles de linge à travers le magasin (22, 24) et devant les points de délivrance (15, 20), des critères de tri variables pouvant être attribués à au moins certains points de délivrance (15, 20), **caractérisé en ce que** les articles de linge peuvent être guidés ou transportés par le transporteur (19, 23) d'un point de délivrance au magasin (22, 24) et du magasin (22, 24) aux points de délivrance (15, 20) et les critères de tri associés aux points de délivrance (15, 20) peuvent être modifiés en fonction des articles de linge à amener ensuite aux points de délivrance (15, 20).

9. Dispositif (10) selon la revendication 8, **caractérisé en ce que**, si un article de linge ne peut être amené à aucun des points de délivrance (15, 20), il peut être ramené dans le magasin (22, 24) par un transporteur en circuit fermé (19, 23).

10. Dispositif (10) selon l'une des revendications 8 ou 9, **caractérisé en ce que** les critères de tri peuvent être associés temporairement aux points de délivrance (15, 20).

11. Dispositif (10) selon l'une des revendications 8 à 10, **caractérisé en ce que** des critères de tri différents peuvent être associés à plusieurs points de délivrance (15, 20), de préférence le même critère de tri peut être associé à certains points de délivrance (15, 20) .
